# EUROPÄISCHE PATENTSCHRIFT

(11) **EP 1 845 548 B1**
(45) Veröffentlichungstag und Bekanntmachung des Hinweises auf die Patenterteilung: **06.03.2013**
(21) Anmeldenummer: 07006361.5
(22) Anmeldetag: 28.03.2007
(51) Int. Cl.: H01H 71/12, H01H 83/14, H02H 3/00, H01H 71/74

(54) **Einrichtung, Schaltungsanordnung und Verfahren zur Isolations- und Erdschlussüberwachung in einem IT-System**
Installation, switching assembly and method for insulation and earth connection surveillance in an non-grounded system
Dispositif, circuit et procédé destinés à la surveillance de l'isolation et du raccordement à la terre dans un système neutre isolé

(30) Priorität: 13.04.2006 DE 102006017893; 09.05.2006 DE 102006021444
(43) Veröffentlichungstag der Anmeldung: 17.10.2007
(73) Patentinhaber: ABB AG, 68309 Mannheim (DE)
(72) Erfinder: Lau, Waldemar, Dipl.-Ing., 68766 Hockenheim (DE); Stegmeier, Peter, Dipl.-Ing., 68305 Mannheim (DE); Bernstein, Jürgen, 76684 Östringen (DE)

(56) Entgegenhaltungen:
- EP-A- 1 557 922
- FR-A- 2 752 479
- US-A- 4 833 564
- US-A- 5 414 395

## Beschreibung

Die Erfindung bezieht sich auf eine Einrichtung zur Isolationsüberwachung und Erdschlussüberwachung in einem IT-System, also einem ungeerdeten Spannungssystem. Dabei kann es sich um ein einphasiges oder dreiphasiges Wechselspannungssystem handeln, das auch als galvanisch getrenntes Spannungsnetz oder IT-Netz bezeichnet wird.

Eine solche Überwachungseinrichtung erfordert einen Summenstromwandler, der ein analoges Signal liefert, das einer elektronischen Auswerteeinrichtung zugeführt wird, die als Auswerteergebnis ein binäres Signal ausgibt zur weiteren Verarbeitung in einem Steuerungssystem, typisch in einer speicherprogrammierten Steuerung.

Marktüblich sind Überwachungseinrichtungen bei denen Summenstromwandler und elektronische Auswerteeinrichtung voneinander räumlich getrennt untergebracht sind, wobei die elektronische Auswerteeinrichtung mehrere Anschlüsse aufweist, nämlich zumindest für die Eingabe des analogen Signals, die Ausgabe des binären Signals, sowie zum Anschluss einer Versorgungsspannung. Mitunter sind außerdem externe Schalter oder Taster für manuellen Reset oder eine Funktionsprüfung vorgesehen. Dazu ist auch ein entsprechender Verdrahtungsaufwand erforderlich.

Die FR 2 752 479 A1 beschreibt einen einphasiger Fehlerstromschutzschalter, der insbesondere einen Summenstromwandler, eine Auswerteelektronik und ein Auslöserelais enthält. Die für die Auswerteelektronik benötigte Hilfsenergie wird den an den Fehlerstromschutzschalter anschließbaren, und durch den Summenstromwandler hindurchgeführten Wechselspannungs-Lastleitungen entnommen.

Davon ausgehend liegt der Erfindung die Aufgabe zugrunde, eine Einrichtung zur Isolations- und Erdschlussüberwachung in einem IT-System anzugeben, die kompakt ausführbar ist und einen geringeren Verdrahtungsaufwand erfordert.

Diese Aufgabe wird erfindungsgemäß durch eine Einrichtung der eingangs genannten Art mit den im Anspruch 1 angegebenen Merkmalen gelöst. Vorteilhafte Ausgestaltungen der erfindungsgemäßen Einrichtung sowie eine Schaltungsanordnung und ein Verfahren sind in weiteren Ansprüchen und in der Beschreibung angegeben.

Mit der Erfindung wird also eine kompakte Einrichtung zur Isolations- und Erdschlussüberwachung in einem ungeerdeten ein- oder dreiphasigen Wechselspannungssystem vorgeschlagen, wobei in einem gemeinsamen Gehäuse ein Summenstromwandler und eine Auswerteelektronik angeordnet sind. Das Gehäuse weist einen durchgehenden Kanal auf, durch den Leiter des zu überwachenden Wechselspannungssystems führbar sind. Der Kanal führt durch einen Magnetkern des Summenstromwandlers, wobei der Magnetkern vorzugsweise als Ringkern, als Schnittbandkern oder als viereckiger Magnetkern (beispielsweise bestehend aus zwei U-förmigen Kernhälften eines Ferritkernes) ausgeführt ist.

Die Einrichtung zur Isolations- und Erdschlussüberwachung hat nur einen im Gehäuse angeordneten ersten Anschluss zum Abschluss eines ersten Pols (UP) einer Versorgungsgleichspannung und einen zweiten Anschluss, der mit dem Binäreingang einer Steuerung zu verbinden ist, wobei der Binäreingang über einen Eingangswiderstand mit dem zweiten Pol (0V) der Versorgungsgleichspannung verbunden ist. Die Anordnung zur Isolations- und Erdschlussüberwachung ist somit in einer Zweidrahttechnik realisiert.

Die Schaltungsanordnung zur Isolations- und Erdschlussüberwachung in einem ungeerdeten ein- oder dreiphasigen Wechselspannungssystem umfasst eine Versorgungsspannung, die einen Stromkreis speist, der durch eine Reihenschaltung eines elektronischen Schalters der Einrichtung zur Isolations- und Erdschlussüberwachung und eines Eingangswiderstandes eines Binäreingangs einer Steuereinrichtung gebildet ist. In der Einrichtung zur Isolations- und Erdschlussüberwachung ist der Sekundärwicklung eines Summenstromwandlers ein Messwiderstand parallel geschaltet. Eine am Messwiderstand gebildete Messspannung ist einem Messverstärker zugeführt, dessen Ausgangssignal über einen Gleichrichter und ein Glättungsfilter einem Komparator zugeführt ist, und dessen Ausgangssignal den elektronischen Schalter ansteuert.

Das Verfahren zur Isolations- und Erdschlussüberwachung in einem ungeerdeten ein- oder dreiphasigen Wechselspannungssystem, mit dem die Aufgabe weiterhin gelöst wird, ist dem Anspruch 11 zu entnehmen. Das erfindungsgemäße Verfahren beruht darauf, dass mittels einer Reihenschaltung eines elektronischen Schalters der Einrichtung zur Isolations- und Erdschlussüberwachung und eines Eingangswiderstandes eines Binäreingans einer Steuereinrichtung in einem - durch eine Versorgungsspannung gespeisten - Stromkreis mittels des elektronischen Schalters eine von dessen Schaltzustand abhängigen Stromänderung und damit eine Spannungsänderung am Eingangswiderstand herbeigeführt wird, die in der Steuereinrichtung als Binärsignal gewertet und verarbeitet wird. Der elektronische Schalter wird abhängig von einer mittels der Einrichtung zur Isolations- und Erdschlussüberwachung detektierten Summenstromdifferenz in den Leiter des zu überwachenden Wechselspannungssystems gesteuert.

Die weitere Beschreibung der Erfindung und deren Vorteile sowie deren Ausgestaltungen erfolgt nachstehend anhand eines in Zeichnungsfiguren dargestellten Ausführungsbeispiels. In den einzelnen Zeichnungsfiguren übereinstimmende Komponenten sind mit denselben Bezugszeichen versehen.

Es zeigen:
- **Fig.** 1: ein Motorsteuerungssystem, das eine erfindungsgemäße Überwachungseinrichtung enthält,
- **Fig.** 2: ein Gehäuseunterteil der Überwachungseinrichtung mit eingesetztem Summenstromwandler und Auswerteelektronik,
- **Fig.** 3: ein Gehäuseoberteil der Überwachungseinrichtung,
- **Fig.** 4: eine Schaltungsanordnung zur Ausführung der Überwachungseinrichtung, und
- **Fig.** 5: eine Darstellung zur Erläuterung der Stromversorgung und Binärsignalausgabe der Überwachungseinrichtung.

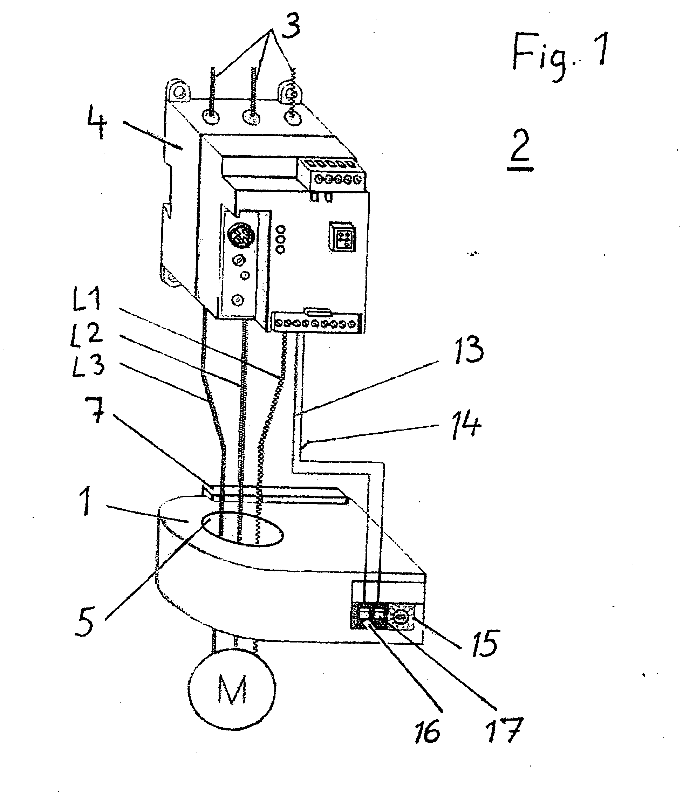

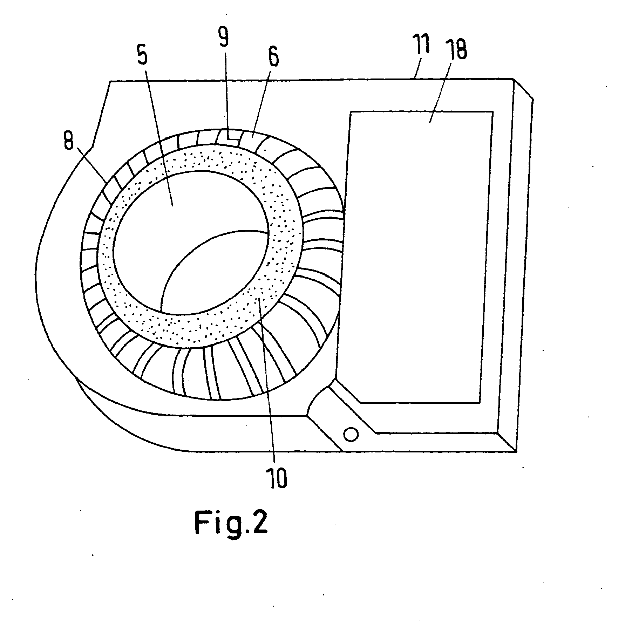

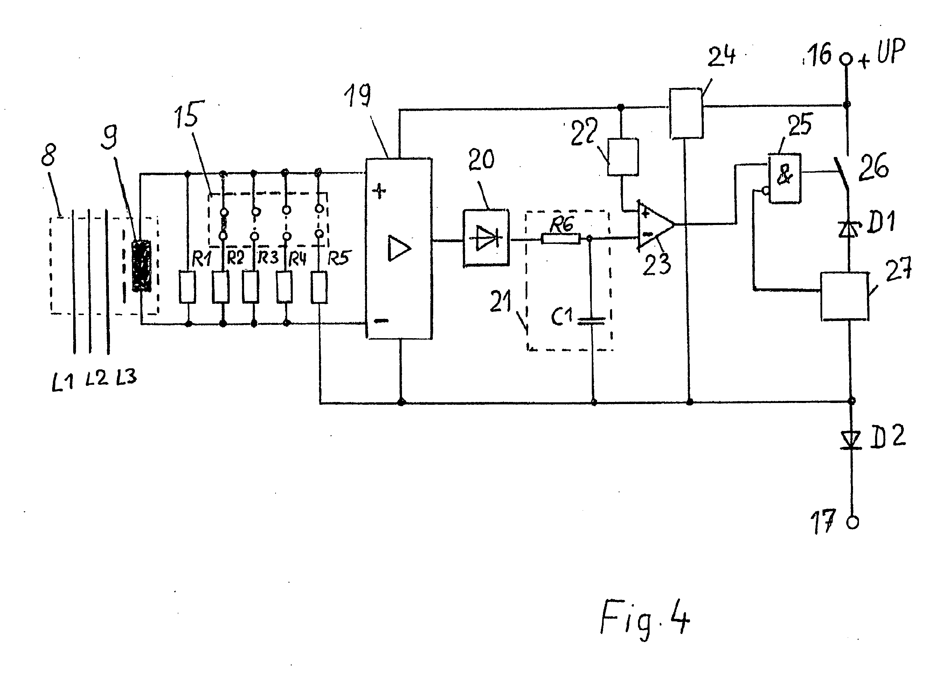

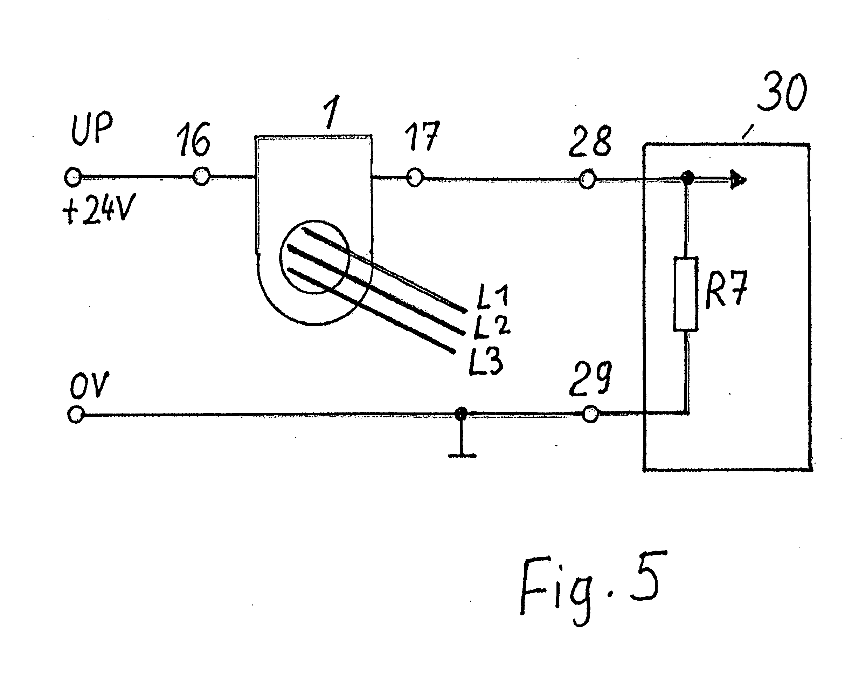

In **Fig.** 1 ist eine beispielhafte Anwendung der erfindungsgemäßen Einrichtung zur Isolations- und Erdschlussüberwachung 1 in einem Motorsteuerungssystem 2 dargestellt, das aus einem ungeerdeten Wechselspannungsnetz 3, im Beispiel aus einem dreiphasigen Netz, gespeist wird. Dabei ist ein Motorsteuerungs- und Schutzgerät 4 über Leiter L1, L2, L3 mit einem Motor M verbunden. Die bezüglich Erdschluss zu überwachenden Leiter L1, L2, L3 sind durch einen Kanal 5 der Einrichtung zur Isolations- und Erdschlussüberwachung 1 geführt. Mit Bezugszeichen 7 ist ein Montagemittel bezeichnet, das beispielsweise eine Befestigung der Überwachungseinrichtung 1 auf einer Hutschiene oder eine Schraubbefestigung ermöglicht. Der Kanal 5 führt durch einen Summenstromwandler 8, der innerhalb der Überwachungseinrichtung 1 angeordnet ist (siehe **Fig.** 2). Die Überwachungseinrichtung 1 wirkt logisch wie ein Kontakt, wie weiter unten anhand der Figuren 4 und 5 erläutert wird, und weist daher nur zwei Anschlüsse 16, 17 auf. Zwei Leitungen 13, 14 sind an den Anschlüssen 16, 17 angeschlossen und verbinden die Überwachungseinrichtung 1 mit dem Motorsteuerungs- und Schutzgerät 4. Die Überwachungseinrichtung 1 enthält außerdem einen Um- oder Wahlschalter 15, der von außen beispielsweise mittels einem Schraubendreher umschaltbar ist zur Einstellung einer gewünschten Empfindlichkeit oder einer Prüfstellung.

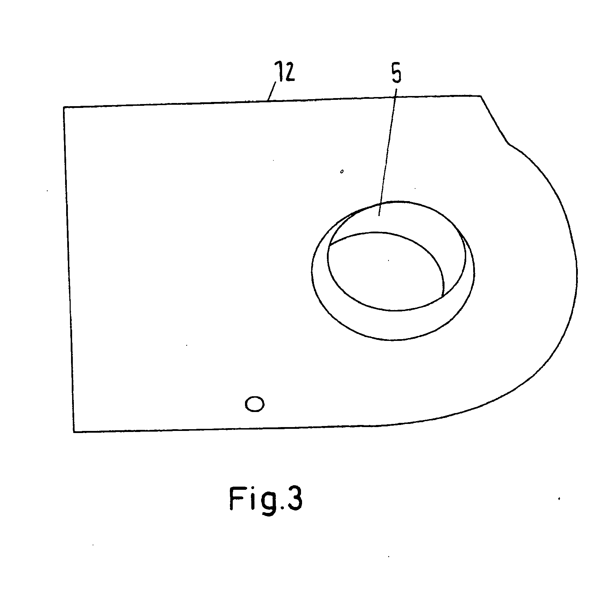

Die Figuren 2 und 3 zeigen in einer vereinfachten Darstellung eine geöffnete Überwachungseinrichtung 1, wobei **Fig.** 2 ein Unterteil 11 und **Fig.** 3 ein Oberteil 12 eines Kunststoffgehäuses zeigen. Aus **Fig.** 2 ist ersichtlich, das der Summenstromwandler 8 und eine Auswerteelektronik 18 nebeneinander angeordnet sind. Der Summenstromwandler 8 umgibt den Kanal 5 und ist beispielsweise mittels eines Ausschäummaterials 10 befestigt. Der Summenstromwandler 8 weist einen Ringkern 6 auf, der eine Sekundärwicklung 9 trägt.

**Fig.** 4 zeigt eine bevorzugte Schaltungsanordnung zur Realisierung der Überwachungseinrichtung 1 entsprechend der **Fig.** 1. Beim Summenstromwandler 8 bilden die drei Leiter L1, L2, L3 des zu überwachenden Wechselspannungssystems die Primärseite. Der Sekundärwicklung 9 des Summenstromwandlers 8 ist ein erster Bürdenwiderstand R1 dauerhaft parallelgeschaltet, der die höchste Empfindlichkeitsstufe bestimmt. Mittels des Wahlschalters 15 ist je nach Schalterstellung einer der weiteren Bürdenwiderstände R2, R3, R4 dem ersten Bürdenwiderstand R1 parallelgeschaltet, wodurch unterschiedliche Messwiderstände einstellbar sind. Der jeweilige Messwiderstand ist auf den Eingang eines Messverstärkers 19 geschaltet. Der Ausgang des Messverstärkers 19 ist mit dem Eingang eines Gleichrichters 20 verbunden. Der Ausgang des Gleichrichters 20 ist über ein - durch einen Widerstand R6 und einen Kondensator C1 gebildet - Filter 21 mit dem negativen Eingang eines Komparators 23 verbunden. Der Ausgang des Komparators 23 ist mit einem Sperr-Und-Glied 25 verbunden, dessen Ausgang auf den Steuereingang eines elektronischen Schalters 26 geschaltet ist. Mittels des elektronischen Schalters 26 ist eine am ersten Anschluss 16 der Überwachungseinrichtung 1 (vergl. **Fig.** 1) anliegende Versorgungsspannung UP über eine Zenerdiode D1 einem ersten Hauptanschluss einer Kurzschluss- und Überlastschutzeinrichtung 27 zuführbar. Ein zweiter Hauptanschluss der Kurzschluss- und Überlastschutzeinrichtung 27 ist über eine Verpolschutzdiode D2 mit dem zweiten Anschluss 17 der Überwachungseinrichtung 1 (vergl. **Fig.** 1) verbunden, der den Ausgang der Überwachungseinrichtung 1 darstellt. Der Ausgang der Kurzschluss- und Überlastschutzeinrichtung 27 ist mit dem invertierenden Eingang des Sperr-Und-Glieds 25 verbunden. Die Versorgungsspannung UP ist einem Spannungsregler 24 zugeführt; die geregelte Spannung versorgt den Messverstärker 19 und eine Referenzspannungsquelle 22, deren Ausgang mit dem positiven Eingang des Komparators 23 verbunden ist. Eine der Schaltstellungen des Wahlschalters 15 ist als Prüfstellung vorgesehen. In dieser Schaltstellung ist über einen Prüfwiderstand R5 und die Verpolschutzdiode D2 der Eingang des Messverstärkers 19 mit dem zweiten Anschluss 17 verbunden. Hierdurch wird in der Prüfstellung dem Messverstärker 19 ein Erdschluss-Signal simuliert, wodurch der Ausgang des Messverstärkers 19 vom logischen Signal 1 auf das logische Signal 0 wechseln muss, und wodurch die gesamte Funktion der - mit de hier beschriebenen Schaltungsanordnung realisierten - Auswerteelektronik 18 (s. **Fig.** 2) überprüfbar ist.

Nachstehend ist die Wirkungsweise der Schaltungsanordnung und damit auch ein Verfahren zur Isolations- und Erdschlussüberwachung beschrieben.

Mit dem Summenstromwandler 8 wird die Summe der Ströme der Leiter L1, L2, L3 erfasst. Ohne Erdschluss ist der Summenstrom Null, und damit ist auch der in die Sekundärwicklung 9 transformierte Strom Null. Der an der Parallelschaltung des ersten Bürdenwiderstands R1 mit einem der weiteren Bürdenwiderstände R2, R3, R4, also dem Messwiderstand gebildete Spannungswert ist in diesem Fall Null, wodurch auch am negativen Eingang eines Komparators 23 der Wert Null ansteht. Dadurch schließt der Komparator 23 über das Sperr-Und-Glied 25 den elektronischen Schalter 26. Die Wirkung der Schaltstellung des elektronischen Schalters 26 wird nachstehend unter Einbezug der Darstellung in **Fig.** 5 erläutert.

**Fig.** 5 zeigt den Binäreingang mit den Klemmen 28, 29 und einem Widerstand R7 einer Steuereinrichtung 30, z. B. einer speicherprogrammierten Steuerung oder eines Motorsteuergeräts. Die Versorgungsspannung UP, z. B. +24V DC ist an den ersten Anschluss 16 der Überwachungseinrichtung 1 angelegt, der zweite Anschluss 17 der Überwachungseinrichtung 1 ist mit dem Binäreingang 28 der Steuereinrichtung 30 verbunden. Die zweite Klemme 29 der Steuereinrichtung 30 ist mit dem 0V-Potential verbunden. Es besteht somit ein Stromkreis mit der Serienschaltung des Widerstands R7 und der Überwachungseinrichtung 1, wobei R7 die Eingangsimpedanz entsprechend den einschlägigen Normen für speicherprogrammierbare Steuerungen ist.

Durch entsprechende Widerstandsdimensionierung der im Stromkreis befindlichen Komponenten R7, 1 kann z. B. erreicht werden, dass am Widerstand R7 eine Spannung von > 5V abfällt wenn der elektronische Schalter 26 in der Überwachungseinrichtung 1 geschlossen ist, also kein Erdschluss vorhanden ist, und dass am Widerstand R7 eine Spannung von < 5V abfällt, wenn der elektronische Schalter 26 in der Überwachungseinrichtung 1 geöffnet ist, also ein Erdschluss vorliegt. Die am Binäreingang 28 der Steuereinrichtung 30 auftretenden Spannungen, beispielsweise von < 5V bzw. > 5V bis 15V, werden in der Steuereinrichtung 30 gemäß den einschlägigen Normen für speicherprogrammierbare Steuerungen als 1-Signal bzw. 0-Signal interpretiert und weiterverarbeitet.

Aus der Darstellung in **Fig.** 5 und der vorstehenden Erläuterung ist ersichtlich, dass die Überwachungseinrichtung 1 über den Eingang der Steuereinrichtung 30 mit Strom versorgt wird, wobei an der Überwachungseinrichtung 1 eine um den Spannungsabfall am Widerstand R7 verringerte Versorgungsspannung zur Verfügung steht.

Im Fall eines Erdschlusses ist der Summenstrom in den überwachten Leitern L1, L2, L3 ungleich Null. Der primäre Differenzstrom wird in die Sekundärwicklung 9 transformiert, wodurch am Messwiderstand ein Spannungswert erzeugt, im Messverstärker 19 verstärkt, anschließend mittels dem Gleichrichter 20 und dem Filter 21 gleichgerichtet und geglättet wird und schließlich am Komparator 23 mit der durch die Referenzspannungsquelle 22 vorgegebenen Referenzspannung verglichen wird. Wenn der erzeugte Spannungswert über der Referenzspannung liegt gibt der Komparator 23 ein logisches 0-Signal aus und öffnet über das Sperr-Und-Glied 25 den elektronischen Schalter 26. Dadurch fließt über den zweiten Anschluss 17, also den Ausgang nur noch ein geringer Strom, beispielsweise <500µA, gemäß den einschlägigen Normen für speicherprogrammierbare Steuerungen, wodurch im Binäreingang der Steuereinrichtung 30 das logische 0-Signal gebildet und in der Steuereinrichtung 30 weiter verarbeitet wird.

Die beschriebene Schaltungsanordnung und die Einrichtung haben eine Reihe von Vorteilen:
Die mit der Schaltung realisierte Zweidrahttechnik, bei der die Überwachungseinrichtung 1 wie ein logischer Kontakt wirkt, erfordert einen minimalen Verdrahtungsaufwand.
Die Einrichtung arbeitet nach dem Ruhestromprinzip. Dabei muss betriebsmäßig ein 1-Signal erzeugt werden, damit die Einrichtung als intakt erkannt wird und kein Erdschluss gemeldet wird. Dagegen bedeutet ein 0-Signal eine Fehlerzustand, also eine Erdschluss oder einen Drahtbruch oder Ausfall der Spannungsversorgung.
Die mit der Einrichtung realisierbaren Werte 0-Signal und 1-Signal sowie die Grenzen der Versorgungsspannung liegen in den durch die einschlägigen Normen für speicherprogrammierbare Steuerungen vorgegebenen Grenzen.

Bei Vertauschen der Anschlüsse 16, 17 fließt durch die Verpolschutzdiode D2 kein Strom, wodurch nach dem Ruhestromprinzip eine Fehlermeldung erfolgt. Nach dem Rücktausch der Anschlüsse arbeitet die Einrichtung wieder normal.

Mittels des Wahlschalters 15 sind unterschiedliche Erdschlussstrom-Ansprechschwellen einstellbar. Bei Kontaktproblemen des Wahlschalters 15 ist automatisch der erste Bürdenwiderstand R1 wirksam, wodurch eine sehr hohe Empfindlichkeit eingestellt ist, die zu einer Fehlermeldung führt.

Der Wahlschalter 15 verfügt über eine Prüfstellung mit der ein Prüfsignal auf den internen Messeingang geschaltet wird, womit bei fehlerfreier Einrichtung ein O-Signal am Ausgang erzeugt werden muss.

Bei zu hoher Belastung des Ausgangs infolge Überlast oder Kurzschluss bewirkt die Kurzschluss- und Überlastschutzeinrichtung 27 über den invertierten Eingang des Sperr-Und-Glied 25 dass der Schalter 26 geöffnet und nach Ablauf einer Wartezeit wieder geschlossen wird zur kurzzeitigen Prüfung des Lastzustandes. Bei anhaltender Überlast oder Kurzschluss wird der Schalter 26 wieder geöffnet. Dieser Vorgang wird solange wiederholt, bis ein normaler Lastzustand eintritt. Der Signalausgang ist somit kurzschluss- und überlastfest.

## Patentansprüche

1. Einrichtung zur Isolations- und Erdschlussüberwachung in einem ungeerdeten ein- oder dreiphasigen Wechselspannungssystem, wobei
a) die Einrichtung in einer sog. Zweidrahttechnik ausgeführt ist, wobei
a1) eine Überwachungseinrichtung (1) mittels nur zweier Leitungen (13, 14) elektrisch mit einer Steuerungseinrichtung (4, 30) verbunden ist,
a2) die Steuerungseinrichtung (4, 30) eine Versorgungsspannung (UP) zur Speisung der Überwachungseinrichtung (1) über die beiden Leitungen (13, 14) liefert, und
a3) eine - mittels der Versorgungsspannung (UP) gespeiste - Reihenschaltung eines elektronischen Schalters (26) und einer Kurzschluss- und Überlastschutzeinrichtung (27) der Überwachungseinrichtung (1), sowie eines Eingangswiderstands (R7) eines Binäreingangs der Steuereinrichtung (4, 30), und der beiden Leitungen (13, 14) gebildet ist,
b) innerhalb eines Gehäuses (11, 12) der Überwachungseinrichtung (1) ein Summenstromwandler (8) und eine Auswerteelektronik (18) angeordnet sind, und der Summenstromwandler (8) einen Magnetkern (6) aufweist, und
c) das Gehäuse (11, 12) der Überwachungseinrichtung (1) einen Kanal (5) aufweist, der durch das Gehäuse (11, 12) und den darin befindlichen Magnetkern (6) führt, und durch den Leiter (L1, L2, L3) des zu überwachenden Wechselspannungssystems führbar sind.

2. Einrichtung nach Anspruch 1, **dadurch gekennzeichnet, dass** im Gehäuse (11, 12) der Überwachungseinrichtung (1) ein von außen bedienbarer Umschalter (15) vorhanden ist, mit dem stufenweise Stromschwellenwerte sowie eine Prüfstellung einstellbar sind.

3. Einrichtung nach Anspruch 1 oder 2, **dadurch gekennzeichnet, dass** in der Überwachungseinrichtung (1) Mittel (D2) vorhanden sind, die einen Verpolschutz bewirken.

4. Einrichtung nach einem der vorstehenden Ansprüche, **dadurch gekennzeichnet, dass** in der Überwachungseinrichtung (1) Mittel (27) vorhanden sind, die einen Überlast- und Kurzschlussschutz bewirken.

5. Einrichtung nach einem der vorstehenden Ansprüche, **dadurch gekennzeichnet, dass** der Magnetkern (6) als Ringkern, als Schnittbandkern oder als viereckiger Magnetkern ausgeführt ist, der eine Sekundärwicklung (9) trägt.

6. Einrichtung nach Anspruch 5, **dadurch gekennzeichnet, dass** in der Überwachungseinrichtung (1) der Sekundärwicklung (9) des Summenstromwandlers (8) ein Messwiderstand (R1, R2, R3, R4) parallelgeschaltet ist, und eine am Messwiderstand (R1, R2, R3, R4) gebildete Messspannung einem Messverstärker (19) zugeführt ist, dessen Ausgangssignal über einen Gleichrichter (20) und ein Glättungsfilter (21) einem Komparator (23) zugeführt ist, dessen Ausgangssignal dazu verwendet ist, den elektronischen Schalter (26) anzusteuern.

7. Einrichtung nach einem der Ansprüche 1 bis 6, **dadurch gekennzeichnet, dass**, in die Reihenschaltung innerhalb der Überwachungseinrichtung (1) zwischen den elektronischen Schalter (26) und die Kurzschluss- und Überlastschutzeinrichtung (27) eine Zenerdiode (D1) geschaltet ist.

8. Einrichtung nach einem der Ansprüche 6 bis 7, **dadurch gekennzeichnet, dass** der Messwiderstand (R1, R2, R3, R4) durch Parallelschaltung eines fest mit der Sekundärwicklung (9) parallelgeschalteten Widerstands (R1) und eines mittels einem Wahlschalter (15) zuschaltbaren Widerstands (R2 oder R3 oder R4) gebildet ist.

9. Einrichtung nach Anspruch 8, **dadurch gekennzeichnet, dass** der Wahlschalter (15) eine Prüfstellung aufweist, in der dem Messverstärker (19) mittels einem Prüfwiderstand (R5) eine Prüfspannung aufschaltbar ist, die einen Erdschluss simuliert.

10. Einrichtung nach einem der Ansprüche 6 bis 9, **dadurch gekennzeichnet, dass** zur Regelung der Versorgungsspannung (UP) in der Überwachungseinrichtung (1) ein Spannungsregler (24) angeordnet ist, der den Messverstärker (19) und eine Referenzspannungsquelle (22) für den Komparator (23) speist.

11. Verfahren zur Isolations- und Erdschlussüberwachung in einem ungeerdeten ein- oder dreiphasigen Wechselspannungssystem mittels einer Überwachungseinrichtung (1) und einer Steuerungseinrichtung (4, 30), die mittels nur zweier Leitungen (13, 14) elektrisch miteinander verbunden sind, wobei
a) mittels einer Reihenschaltung eines elektronischen Schalters (26) einer Überwachungseinrichtung (1) zur Isolations- und Erdschlussüberwachung und eines Eingangswiderstands (R7) eines Binäreingangs einer Steuereinrichtung (4, 30) in einem durch eine Versorgungsspannung (UP) gespeisten Stromkreis mittels des elektronischen Schalters (26) eine von dessen Schaltzustand abhängige Stromänderung und damit eine Spannungsänderung am Eingangswiderstand (R7) herbeigeführt wird, die in der Steuereinrichtung (4. 30) als Binärsignal gewertet und verarbeitet wird, und wobei
b) der elektronische Schalter (26) abhängig von einer mittels der Überwachungseinrichtung (1) detektierten Summenstromdifferenz in den Leitern (L1, L2, L3) des zu überwachenden Wechselspannungssystems gesteuert wird.

## Claims

1. Device for insulation and earth fault monitoring in an unearthed single-phase or three-phase AC voltage system, wherein
a) the device is implemented using so-called two-wire technology, wherein
a1) a monitoring device (1) is connected electrically to a control device (4, 30) by means of only two lines (13, 14),
a2) the control device (4, 30) provides a supply voltage (UP) for feeding the monitoring device (1) via the two lines (13, 14), and
a3) a series circuit comprising an electronic switch (26) and a short-circuit and overload protection device (27) of the monitoring device (1) as well as an input resistor (R7) of a binary input of the control device (4, 30) and the two lines (13, 14) is formed, said series circuit being fed by means of the supply voltage (UP),
b) a summation current transformer (8) and evaluation electronics (18) are arranged within a housing (11, 12) of the monitoring device (1), and the summation current transformer (8) has a magnet core (6), and
c) the housing (11, 12) of the monitoring device (1) has a channel (5), which is guided through the housing (11, 12) and the magnet core (6) located therein and through which conductors (L1, L2, L3) of the AC voltage system to monitored can be guided.

2. Device according to Claim 1, **characterized in that** an externally operable changeover switch (15) is provided in the housing (11, 12) of the monitoring device (1), with which changeover switch current threshold values and a test position can be set stepwise.

3. Device according to Claim 1 or 2, **characterized in that** means (D2) which effect polarity reversal protection are provided in the monitoring device (1).

4. Device according to one of the preceding claims, **characterized in that** means (27) which effect overload and short-circuit protection are provided in the monitoring device (1).

5. Device according to one of the preceding claims, **characterized in that** the magnet core (6) is in the form of a torroidal core, a cut strip-wound core or a rectangular magnet core, which bears a secondary winding (9).

6. Device according to Claim 5, **characterized in that** a measuring resistor (R1, R2, R3, R4) is connected in parallel with the secondary winding (9) of the summation current transformer (8) in the monitoring device (1), and a measurement voltage formed at the measuring resistor (R1, R2, R3, R4) is supplied to a measuring amplifier (19), whose output signal is supplied to a comparator (23) via a rectifier (20) and a smoothing filter (21), the output signal of said comparator being used to actuate the electronic switch (26).

7. Device according to one of Claims 1 to 6, **characterized in that** a zener diode (D1) is connected into the series circuit within the monitoring device (1) between the electronic switch (26) and the short-circuit and overload protection device (27).

8. Device according to either of Claims 6 and 7, **characterized in that** the measuring resistor (R1, R2, R3, R4) is formed by connecting in parallel a resistor (R1), which is connected permanently in parallel with the secondary winding (9), and a resistor (R2 or R3 or R4), which can be connected by means of a selector switch (15).

9. Device according to Claim 8, **characterized in that** the selector switch (15) has a test position, in which a test voltage can be connected to the measuring amplifier (19) by means of a test resistor (R5), which test voltage simulates an earth fault.

10. Device according to one of Claims 6 to 9, **characterized in that**, a voltage regulator (24) is arranged for regulating the supply voltage (UP) in the monitoring device (1), which voltage regulator feeds the measurement amplifier (19) and a reference voltage source (22) for the comparator (23).

11. Method for insulation and earth fault monitoring in an unearthed single-phase or three-phase AC voltage system by means of a monitoring device (1) and a control device (4, 30), which are electrically connected to one another by means of only two lines (13, 14), wherein
a) by means of a series circuit comprising an electronic switch (26) of a monitoring device (1) for insulation and earth fault monitoring and an input resistor (R7) of a binary input of a control device (4, 30) in a circuit fed by a supply voltage (UP) by means of the electronic switch (26), a change in current that is dependent on the switching state of said electronic switch and thus a change in voltage at the input resistor (R7) is brought about, and this change in voltage is evaluated as a binary signal and processed in the control device (4, 30), and wherein
b) the electronic switch (26) is controlled depending on a summation current difference, detected by means of the monitoring device (1), in the conductors (L1, L2, L3) of the AC voltage system to be monitored.

## Revendications

1. Dispositif de surveillance de l'isolation et de la mise à la terre dans un système à tension alternative mono- ou triphasé non relié à la terre, dans lequel
a) le dispositif est réalisé dans une technique dite à deux fils,
a1) un dispositif de surveillance (1) étant relié électriquement avec un dispositif de commande (4, 30) au moyen de deux lignes (13, 14) seulement,
a2) le dispositif de commande (4, 30) délivrant une tension d'alimentation (UP) pour alimenter le dispositif de surveillance (1) par le biais des deux lignes (13, 14), et
a3) un circuit série - alimenté au moyen de la tension d'alimentation (UP) - étant formé par un commutateur électronique (26) et un dispositif de protection contre les courts-circuits et les surcharges (27) du dispositif de surveillance (1), ainsi que par une résistance d'entrée (R7) d'une entrée binaire du dispositif de commande (4, 30) et les deux lignes (13, 14),
b) un convertisseur de courant total (8) et une électronique d'interprétation (18) sont disposés à l'intérieur d'un boîtier (11, 12) du dispositif de surveillance (1), et le convertisseur de courant total (8) présente un noyau magnétique (6), et
c) le boîtier (11, 12) du dispositif de surveillance (1) présente un canal (5) qui mène à travers le boîtier (11, 12) et le noyau magnétique (6) qui s'y trouve, et peut être guidé à travers les conducteurs (L1, L2, L3) du système à tension alternative à surveiller.

2. Dispositif selon la revendication 1, **caractérisé en ce qu'**un inverseur (15) pouvant être actionné de l'extérieur est présent dans le boîtier (11, 12) du dispositif de surveillance (1), lequel permet de régler par paliers les valeurs de seuil du courant ainsi qu'une position de test.

3. Dispositif selon la revendication 1 ou 2, **caractérisé en ce que** des moyens (D2) qui réalisent une protection contre les inversions de polarité sont présents dans le dispositif de surveillance (1).

4. Dispositif selon l'une des revendications précédentes, **caractérisé en ce que** des moyens (27) qui réalisent une protection contre les surcharges et les courts-circuits sont présents dans le dispositif de surveillance (1).

5. Dispositif selon l'une des revendications précédentes, **caractérisé en ce que** le noyau magnétique (6) est réalisé sous la forme d'un noyau torique, d'un noyau fendu enroulé ou d'un noyau magnétique parallélépipédique qui supporte un enroulement secondaire (9).

6. Dispositif selon la revendication 5, **caractérisé en ce que** dans le dispositif de surveillance (1), une résistance de mesure (R1, R2, R3, R4) est branchée en parallèle avec l'enroulement secondaire (9) du convertisseur de courant total (8) et une tension de mesure formée aux bornes de la résistance de mesure (R1, R2, R3, R4) est acheminée à un amplificateur de mesure (19) dont le signal de sortie est acheminé, par le biais d'un redresseur (20) et d'un filtre de lissage (21), à un comparateur (23) dont le signal de sortie est utilisé pour commander le commutateur électronique (26).

7. Dispositif selon l'une des revendications 1 à 6, **caractérisé en ce qu'**une diode zener (D1) est branchée dans le circuit série à l'intérieur du dispositif de surveillance (1) entre le commutateur électronique (26) et le dispositif de protection contre les courts-circuits et les surcharges (27).

8. Dispositif selon l'une des revendications 6 à 7, **caractérisé en ce que** la résistance de mesure (R1, R2, R3, R4) est formée par le branchement en parallèle d'une résistance (R1) branchée en parallèle à demeure avec l'enroulement secondaire (9) et d'une résistance (R2 ou R3 ou R4) pouvant être mise en circuit au moyen d'un sélecteur (15).

9. Dispositif selon la revendication 8, **caractérisé en ce que** le sélecteur (15) présente une position de test dans laquelle une tension de test qui simule une mise à la terre peut être appliquée à l'amplificateur de mesure (19) au moyen d'une résistance de test (R5).

10. Dispositif selon l'une des revendications 6 à 9, **caractérisé en ce qu'**un régulateur de tension (24) est disposé dans le dispositif de surveillance (1) pour réguler la tension d'alimentation (UP), lequel alimente l'amplificateur de mesure (19) et une source de tension de référence (22) pour le comparateur (23).

11. Procédé de surveillance de l'isolation et de la mise à la terre dans un système à tension alternative mono- ou triphasé non relié à la terre au moyen d'un dispositif de surveillance (1) et d'un dispositif de commande (4, 30) qui sont reliés électriquement entre eux au moyen de deux lignes (13, 14) seulement, selon lequel
a) dans un circuit électrique alimenté par une tension d'alimentation (UP), une modification du courant et ainsi une modification de la tension aux bornes d'une résistance d'entrée (R7), dépendante de l'état de commutation d'un commutateur électronique (26), est provoquée à l'aide de celui-ci au moyen d'un circuit série composé du commutateur électronique (26) d'un dispositif de surveillance (1) pour surveiller l'isolation et la mise à la terre et de la résistance d'entrée (R7) d'une entrée binaire d'un dispositif de commande (4, 30), laquelle est considérée et traitée comme un signal binaire dans le dispositif de commande (4, 30), et selon lequel
b) le commutateur électronique (26) est commandé en fonction d'une différence de courant total dans les conducteurs (L1, L2, L3) du système à tension alternative à surveiller détectée au moyen du dispositif de surveillance.
